# EUROPEAN PATENT SPECIFICATION

(11) **EP 2 339 106 B1**
(45) Date of publication and mention of the grant of the patent: **25.02.2015**
(21) Application number: 10010266.4
(22) Date of filing: 26.03.2008
(51) Int. Cl.: E06B 7/32, A01K 1/00

(54) **An animal access system**
System für den Zugang von Tieren
Système d'accès d'animal

(30) Priority: 28.03.2007 GB 0705926
(43) Date of publication of application: 29.06.2011
(62) Divisional of application: 08251073.6
(73) Proprietor: Radio Systems Corporation, Knoxville, TN 37932 (US)
(72) Inventor: Chamberlain, David, St. Peters, Guernsey, GY7 9AL British Channel Island (GB); Chamberlain, Helen, St. Peters, Guernsey, GY7 9AL British Channel Island (GB)
(74) Representative: Sawodny, Michael-Wolfgang

(56) References cited:
- GB-A- 1 576 318
- GB-A- 2 376 977
- GB-A- 2 381 180
- US-A1- 2002 010 390

## Description

The present invention relates to an animal access system and particularly but not exclusively relates to an animal access system for mounting on a door or wall of a building to enable a cat or dog access to and from the building.

It has previously been proposed to provide an animal access system comprising a lockable door that is unlocked in response to a control signal generated as a result of a microchip implant in the animal being detected by a sensor adjacent the door. It has been proposed to provide such a system with a canopy in order to channel the animal towards the sensor. The sensor In practice is mounted at a projecting part of the canopy because the system typically only functions correctly when the animal implant is located directly below the sensor. UK patent 2381180 discloses such a system.

In use, the canopy projects significantly from the door or wall which is unsightly, can be a trip hazard, and is susceptible to damage. The damage can be costly to repair not least because the sensor Is mounted In the canopy itself. Additionally there needs to be relatively good alignment and close proximity between the sensor and the Implant In the animal for a control signal to be generated.

An animal access system has been made known In G B-A-2 381 180. GB-A-2 381 180 is considered as being the closest p5rior art and discloses an animal access system comprising a lockable access door, an access door surround, and an Implant adapted to be inserted through the outer tissue of an animal, the access door surround being provided with an induction coil operative to induce an electro-magnetic field at the access door, the induction coil being controlled by control means operative to generate a control signal to lock or unlock the access door in response to a change In the induced electro-magnetic field generated as a result of the implant entering the induced electro-magnetic field.

According to the invention there is provided an animal access system comprising a lockable access door, an access door surround, and an Implant adapted to be inserted through the outer tissue of an animal, the access door surround being provided with an induction coil operative to Induce an electro-magnetic field at the access door, the Induction coil being controlled by control means operative to generate a control signal to lock or unlock the access door in response to a change In the Induced electro-magnetic field generated as a result of the implant entering the Induced electro-magnetic field according to claim 1.

Preferably the induction coil is spaced from the plane of the access door.

Preferably the system comprises an elongate housing adapted to be mounted on part of a building so as to extend through that part of the building, the access door and induction coil being spaced apart along the longitudinal axis of the housing. This may help to reduce water ingress through the system.

Preferably the length of the housing is adjustable.

Preferably the implant comprises a microchip.

Preferably the implant comprises detector means operative to detect at least one clinical parameter of the animal, the control means being operative to generate a health signal indicative of the clinical parameter, In response to a change In the induced electro-magnetic field.

Preferable the control means is operative to adjust the induced electro-magnetic field strength. Adjusting the magnetic field strength is operative to adjust the effective read range of the system.

The control means may comprise circuit means.

The control means may comprise microprocessor means.

Preferably the control means comprises memory means.

Preferably the memory means is operative to store data indicative of the identity of unauthorised animals attempting to access the animal access system.

Preferably the memory means is operative to store data indicative of the number of times an animal has been detected by the system.

Preferably the control means is provided with display means.

Preferably the control means is provided with data transfer means to enable data to be transferred between the control means and an external electronic data processor.

The data transfer means may comprise, for example, a USB port, or a wireless adaptor.

Preferably animal deterrent means is provided operative to deter an unauthorised animal from entering the animal access system.

Preferably the deterrent means is activated in response to a signal generated by the control means indicative of an animal not authorised to use the animal access system.

The deterrent means may comprise a fluid nozzle operative to direct fluid towards the non-authorised animal.

Preferably the system comprises a fluid source connected to the fluid nozzle, the fluid source being removably mounted on the system. This enables the fluid source to be replenished or replaced.

The deterrent means may comprise optical means operative to emit a deterrent optical signal. Preferably the deterrent optical signal comprises a flash of light from the optical means.

Other aspects of the present invention may include any combination of the features or limitations referred to herein.

The present invention may be carried into practice in various ways, but embodiments will now be described by way of example only with reference to the accompanying drawings in which:
**Figure 1** is a front view of an animal access system in accordance with the present intention;
**Figure 2** is a side view of the animal access system of Figure 1; and

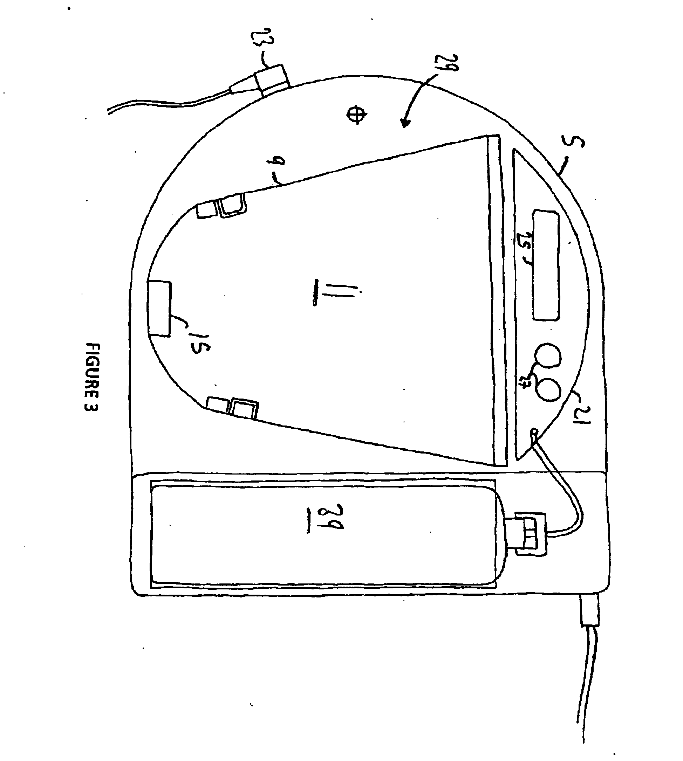

**Figure 3** is a rear view of the animal access system of Figures 1 and 2.

Referring to the Figures, an animal access system 1 comprises a front housing 3 linked to a rear housing 5 by a telescopic tubular corridor 7. The tubular corridor 7 in use extends through an opening formed in a door or wall of a building (not shown), the tubular corridor 7 being extended or retracted to correspond to the thickness of the door or wall. The front and rear housings 3, 5 are secured respectively to the front and rear of the door or wall using screws or the like.

The rear housing 5 is provided with an access aperture 9 closed by an animal access door 11, the top of the door 11 being pivotably mounted 13 on the rear housing 5 and the bottom of the door 11 being weighted and/or comprising a magnet 15 that is attracted to a corresponding magnet 17 mounted in the base of the rear housing 5. The weight or magnets 15, 17 serve to bias the door 11 to the closed position shown in the Figures.

A pair of locks 19 are provided at opposed side margins of the door 11 which when activated lock the door 11 in the closed position. Each lock 19 can comprise any suitable mechanism or mechanisms such as for example a solenoid. Activation of each lock 19 is controlled by control means 21 mounted in an upper part of the rear housing 5.

The control means 21 comprises, in this example, a microprocessor and electronic circuitry connected to a power source via power cable 23. The cable 23 is plugged into the rear housing 5 and a tamper resistant lock is provided to resist the cable 23 being pulled from the rear housing 5. The control means 21 further comprises a display 25 and control buttons 27.

The front housing 3 comprises an access door surround 29 that surrounds the periphery of an animal access aperture 31 which comprises one end of the telescopic tubular corridor 7.

The door surround 29 is provided with an induction coil 30 that extends around the access aperture 31, activation of the coil 2 being controlled by the control means 21.

The door surround 29 is also formed with an upper panel 33 in which are mounted an adjustable light sensor 35, a deterrent optical device comprising a light emitter 37, and a fluid nozzle 39 operative to emit a deterrent gas or liquid spray. The spray could comprise a mixture of a gas and a liquid. The light emitter 37 and fluid nozzle 39 comprise deterrent means controlled by the control means 21. The fluid nozzle 39 is connected to a removable fluid source comprising a canister 41 of compressed gas or fluid mounted on one side of the rear housing 5.

The system 1 further comprises an implant (not shown) adapted to be inserted through the outer skin of an animal that is to be allowed access through the door 11, the implant comprising a microchip.

In use of the system 1, the animal in which the microchip has been implanted approaches the front housing 3 and enters the induced electro-magnetic field produced by the induction coil 32 the electro-magnetic field projecting forwardly of the front housing 3. The microchip distorts the electro-magnetic field and this change in the field is detected by the control means 21 which generales a control signal operative to unlock the access door 11 to allow the animal access through the door 11.

If an animal comprising an implant that has not been granted access through the door 11 enters the induced electro-magnetic field, the control means 21 detects a distortion in the electro-magnetic field indicative of the non-authorised animal and either sends no control signal to the locks 19. or sends a control signal that activates the locks 19 to lock the door 11.

The control means 21 is also operative to activate the deterrent means when the change in the induced electro-magnetic field is indicative of a non-authorised animal. This would be the case if an un-programmed microchip was detected, or if a non-microchipped animal attempted entry. Thus, a deterrent flashing light can be produced by the light emitter 37, or a deterrent fluid spray can be omitted from the nozzle 39. A single pulse of light or fluid spray can be provided, or a sequence of pulses.

The control means 21 comprises any suitable electronic device but preferably comprises a programmable microprocessor comprising data transfer means that in this example comprises a USB port 43. The control means 21 comprises a clock and timer that are user programmable to enable access through the door 11 at predetermined times only. The user can also determine whether or not the deterrent means is activated, and the duration of such activation. The control means 21 is further operative in a set-up mode wherein the strength of the induced electro-magnetic field is adjusted to a desired range - ie the distance from the door 11 that the animal has to be to distort the induced electro-magnetic field can be adjusted.

The animal implant also comprises a detector operative to detect a clinical parameter of the animal such as pulse, temperature or the like. The implant and the control means 21 are arranged such that the implant causes a distortion of the induced electro-magnetic field that is processed by the control means 21 to indicate to the user, or to store, data indicative of the detected clinical parameter of the animal. The control means 21 is operative to store such data over time so as to indicate to the user, either on the display means or via a data file for viewing on an external device, any change in the detected clinical parameter(s) over time.

Additional software/data can be transferred to the control means 21 via the USB port. The USB port may comprise any other type of data transfer means including, for example, a wireless Blue Tooth^{®} means.

The control means 21 is controlled using the display 25 and buttons 27, or via an external device such as a PC or the like.

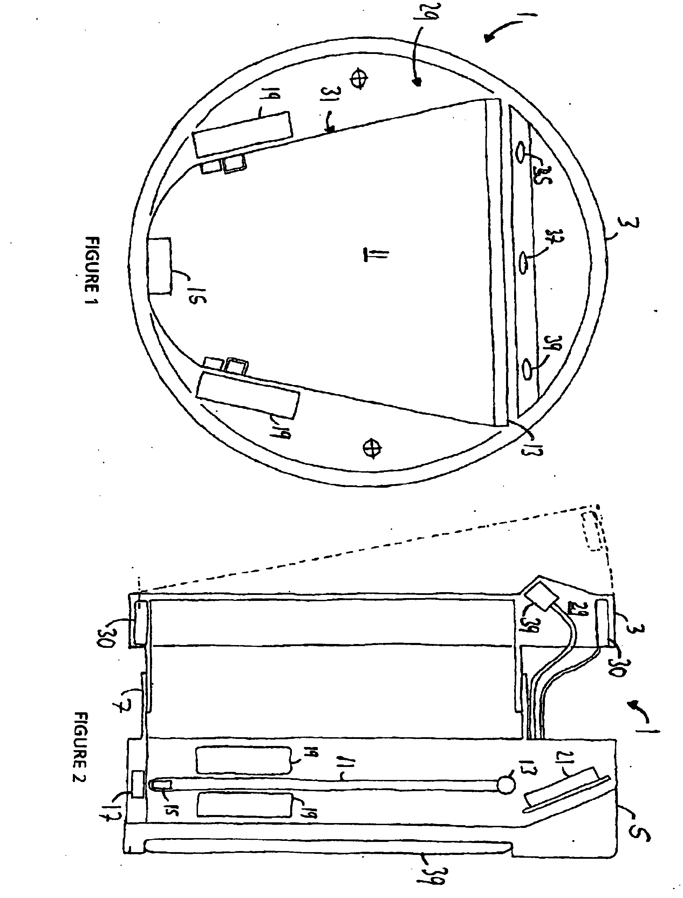

The door surround 29 may be inclined forwardly from the plate of the access aperture 31 by up to approximately 25°, as shown in phantom on Figure 2.

## Claims

1. An animal access system (1) comprising a lockable access door (11), an access door surround (29), and an implant adapted to be inserted through the outer tissue of an animal, the access door (11) surround being provided with an induction coil (32) operative to induce an electro-magnetic field at the access door (11), the Induction coil (32) being controlled by control means (21) operative to generate a control signal to lock or unlock the access door (11) in response to a change In the induced electro-magnetic field generated as a result of the Implant entering the induced electro-magnetic field,
**characterized In that**
the implant comprises detector means operative to detect at least one clinical parameter of the animal, the control means (29) being operative to process the change in the Induced electro-magnetic field and to generate a health signal indicative of the clinical parameter, in response to the change in the induced electro-magnetic field.

2. The animal access system of claim 1 wherein the induction coil (32) is spaced from the plane of the access door (11).

3. The animal access system of claim 2 wherein the system comprises an elongate housing adapted to be mounted on part of a building so as to extend through that part of the building, the access door (11) and induction coil (32) being spaced apart along the longitudinal axis of the housing (5).

4. The animal access system of claim 3 wherein the length of the housing (5) is adjustable.

5. The animal access system of any one of the preceding claims
wherein the implant comprises a microchip.

6. The animal access system of any one of the preceding claims
wherein the control means (21) is operative to adjust the induced electro-magnetic field strength.

7. The animal access system of any one of the preceding sentences
wherein the control means (21) comprises circuit means.

8. The animal access system of any one of the preceding claims
wherein the control means (21) comprise one of the following means:
- circuit means;
- microprocessor means;
- memory means.

9. The animal access system of claim 8 wherein the memory means is operative to store data indicative of the identity of unauthorised animals attempting to access the animal access system.

10. The animal access system of claim 8 or claim 9 wherein the memory means is operative to store data indicative of the number of times an animal has been detected by the system.

11. The animal access system of any one of the preceding claims
wherein the control means (21) is provided with display means (25).

12. The animal access system of any one of the preceding claims
wherein the control means (21) is provided with data transfer means to enable data to be transferred between the control means (21) and an external electronic data processor.

13. The animal access system of any one of the preceding claims
wherein animal deterrent means is provided operative to deter an unauthorised animal from entering the animal access system.

14. The animal access system of claim 13 wherein
- the deterrent means is activated in response to a signal generated by the control means (21) indicative of an animal not authorised to use the animal access system; or
- the deterrent means comprises a fluid nozzle operative to direct fluid towards the non-authorised animal; or
- the deterrent means comprises optical means operative to emit a deterrent optical signal.

15. The animal access system of claim 14 wherein the system comprises a fluid source connected to the fluid nozzle, the fluid source being removable mounted on the system.

## Patentansprüche

1. Zugangssystem für Tiere (1), umfassend eine sperrbare Zugangstür (11), eine Zugangstür-Einfassung (29) und ein Implantat, das dafür ausgelegt ist, durch das äußere Gewebe eines Tieres eingesetzt zu werden, wobei die Einfassung der Zugangstür (11) mit einer Induktionsspule (32) versehen ist, die dazu dient, ein elektromagnetisches Feld an der Zugangstür (11) zu induzieren, wobei die Induktionsspule (32) durch ein Steuerungsmittel (21) gesteuert wird, das dazu dient, ein Steuerungssignal zu generieren, um die Zugangstür (11) als Reaktion auf eine Änderung im induzierten elektromagnetischen Feld zu sperren oder zu entsperren, die infolge des Eindringens des Implantats in das induzierte elektromagnetische Feld zustande kommen,
**dadurch gekennzeichnet, dass**
das Implantat ein Detektormittel umfasst, das dazu dient, wenigstens einen klinischen Parameter des Tieres festzustellen, wobei das Steuerungsmittel (21) dazu dient, als Reaktion auf die Änderung des induzierten elektromagnetischen Felds die Änderung des induzierten elektromagnetischen Felds zu verarbeiten und ein Gesundheitssignal zu generieren, das für den klinischen Parameter kennzeichnend ist.

2. Zugangssystem für Tiere nach Anspruch 1, wobei die Induktionsspule (32) von der Ebene der Zugangstür (11) beabstandet ist.

3. Zugangssystem für Tiere nach Anspruch 2, wobei das System ein langgestrecktes Gehäuse umfasst, das dafür ausgelegt ist, derart an einem Teil eines Gebäudes montiert zu werden, dass es sich durch diesen Teil des Gebäudes erstreckt, wobei die Zugangstür (11) und die Induktionsspule (32) entlang der Längsachse des Gehäuses (5) voneinander beabstandet sind.

4. Zugangssystem für Tiere nach Anspruch 3, wobei die Länge des Gehäuses (5) einstellbar ist.

5. Zugangssystem für Tiere nach einem der vorhergehenden Ansprüche, wobei das Implantat einen Mikrochip umfasst.

6. Zugangssystem für Tiere nach einem der vorhergehenden Ansprüche, wobei das Steuerungsmittel (21) dazu dient, die Stärke des induzierten elektromagnetischen Feldes einzustellen.

7. Zugangssystem für Tiere nach einem der vorhergehenden Ansprüche, wobei das Steuerungsmittel (21) Schaltkreismittel umfasst.

8. Zugangssystem für Tiere nach einem der vorhergehenden Ansprüche, wobei das Steuerungsmittel (21) eines der folgenden Mittel umfasst:
- ein Schaltkreismittel;
- ein Mikroprozessormittel;
- ein Speichermittel.

9. Zugangssystem für Tiere nach Anspruch 8, wobei das Speichermittel dazu dient, Daten zu speichern, welche die Identität nicht berechtigter Tiere anzeigen, die versuchen, in das Zugangssystem für Tiere einzudringen.

10. Zugangssystem für Tiere nach Anspruch 8 oder Anspruch 9, wobei das Speichermittel dazu dient, Daten zu speichern, welche die Häufigkeit anzeigen, mit der ein Tier vom System erfasst worden ist.

11. Zugangssystem für Tiere nach einem der vorhergehenden Ansprüche, wobei das Steuerungsmittel (21) mit einem Anzeigemittel (25) ausgestattet ist.

12. Zugangssystem für Tiere nach einem der vorhergehenden Ansprüche, wobei das Steuerungsmittel (21) mit einem Datenübertragungsmittel versehen ist, um die Übertragung von Daten zwischen dem Steuerungsmittel (21) und einer externen elektronischen Datenverarbeitung zu ermöglichen.

13. Zugangssystem für Tiere nach einem der vorhergehenden Ansprüche, wobei ein Tierabschreckungsmittel vorgesehen ist, das dazu dient, ein nicht berechtigtes Tier vom Betreten des Zugangssystems für Tiere abzuhalten.

14. Zugangssystem für Tiere nach Anspruch 13, wobei
- das Abschreckungsmittel als Reaktion auf ein vom Steuerungsmittel (21) generiertes Signal aktiviert wird, das ein zur Benutzung des Zugangssystems für Tiere nicht berechtigtes Tier anzeigt; oder
- das Abschreckungsmittel eine Fluiddüse umfasst, die dazu dient, ein Fluid auf das nicht berechtigte Tier zu lenken; oder
- das Abschreckungsmittel ein optisches Mittel umfasst, das dazu dient, ein abschreckendes optisches Signal auszusenden.

15. Zugangssystem für Tiere nach Anspruch 14, wobei das System eine mit der Fluiddüse verbundene Fluidquelle umfasst, wobei die Fluidquelle abnehmbar am System montiert ist.

## Revendications

1. Système d'accès pour animaux (1) comprenant une trappe d'accès verrouillable (11), un entourage de trappe d'accès (29) et un implant pouvant être inséré à travers les tissus externes d'un animal, l'entourage de la trappe d'accès (11) étant muni d'une bobine d'induction (32) pouvant induire un champ électromagnétique au niveau de la trappe d'accès (11), la bobine d'induction (32) étant commandée par des moyens de commande (21) pouvant générer un signal de commande pour verrouiller ou déverrouiller la trappe d'accès (11) en réponse à un changement du champ électromagnétique induit lorsque l'implant pénètre dans le champ électromagnétique induit,
**caractérisé en ce que** l'implant comprend des moyens de détection pouvant détecter au moins un paramètre clinique de l'animal, les moyens de commande (21) pouvant traiter le changement du champ électromagnétique induit et générer un signal d'état de santé indiquant le paramètre clinique, en réponse au changement du champ électromagnétique induit.

2. Système d'accès pour animaux selon la revendication 1, dans lequel la bobine d'induction (32) est espacée du plan de la trappe d'accès (11).

3. Système d'accès pour animaux selon la revendication 2, dans lequel le système comprend un boîtier allongé adapté pour être monté sur une partie d'un bâtiment de façon à s'étendre à travers cette partie du bâtiment, la trappe d'accès (11) et la bobine d'induction (32) étant espacées le long de l'axe longitudinal du boîtier (5).

4. Système d'accès pour animaux selon la revendication 3, dans lequel la longueur du boîtier (5) est réglable.

5. Système d'accès pour animaux selon l'une quelconque des revendications précédentes, dans lequel l'implant contient une micropuce.

6. Système d'accès pour animaux selon l'une quelconque des revendications précédentes, dans lequel les moyens de commande (21) peuvent ajuster l'intensité du champ électromagnétique induit.

7. Système d'accès pour animaux selon l'une quelconque des revendication précédentes, dans lequel les moyens de commande (21) comprennent des moyens formant circuit.

8. Système d'accès pour animaux selon l'une quelconque des revendications précédentes, dans lequel les moyens de commande (21) comprennent l'un des moyens suivants:
- moyen formant circuit,
- moyen formant microprocesseur,
- moyen de mémoire.

9. Système d'accès pour animaux selon la revendication 8, dans lequel le moyen formant mémoire peut stocker des données indiquant l'identité des animaux non autorisés qui tentent d'accéder au système d'accès pour animaux.

10. Système d'accès pour animaux selon la revendication 8 ou 9, dans lequel le moyen de mémoire peut stocker des données indiquant le nombre de fois où un animal a été détecté par le système.

11. Système d'accès pour animaux selon l'une quelconque des revendications précédentes, dans lequel les moyens de commande (21) sont dotés de moyens d'affichage (25).

12. Système d'accès pour animaux selon l'une quelconque des revendications précédentes, dans lequel les moyens de commande (21) sont munis de moyens pour transférer les données afin de permettre le transfert de données entre les moyens de commande (21) et un processeur de données électronique externe.

13. Système d'accès pour animaux selon l'une quelconque des revendications précédentes, dans lequel des moyens répulsifs contre les animaux sont prévus pour empêcher un animal non autorisé d'entrer dans le système d'accès pour animaux.

14. Système d'accès pour animaux selon la revendication 13, dans lequel
- le moyen répulsif est activé en réponse à un signal généré par le moyen de commande (21) indiquant qu'un animal non autorisé utilise le système d'accès pour animaux ; ou
- le moyen répulsif comprend un pulvérisateur de liquide pouvant diriger du liquide vers l'animal non autorisé ; ou
- le moyen répulsif comprend des moyens optiques pouvant émettre un signal optique répulsif.

15. Système d'accès pour animaux selon la revendication 14, dans lequel le système comprend une source de liquide reliée au pulvérisateur de liquide, laquelle source de liquide est montée de façon amovible sur le système.
